# EUROPEAN PATENT APPLICATION

(11) **EP 4 080 470 A2**
(43) Date of publication of application: **26.10.2022**
(21) Application number: 22183463.3
(22) Date of filing: 07.07.2022
(51) Int. Cl.: G06V 40/40, G06V 10/62, G06V 40/16, G06V 20/40

(54) **METHOD AND APPARATUS FOR DETECTING LIVING FACE**

(30) Priority: 08.07.2021 CN 202110775389
(71) Applicant: BEIJING BAIDU NETCOM SCIENCE TECHNOLOGY CO., LTD., Beijing 100085 (CN)
(72) Inventor: WANG, Keyao, Beijing 100085 (CN)
(74) Representative: Maiwald Patent- und Rechtsanwaltsgesellschaft mbH

(57) **Abstract**

A method for detecting a living face includes: obtaining consecutive N image frames in a video, and obtaining N face image frames by performing face alignment processing on the N image frames, wherein N is an integer greater than 1; obtaining N-1 first differential image frames by performing differential calculation on two adjacent frames of the N face image frames; obtaining a second differential image by performing differential calculation on the N^{th} image frame and the first image frame in the N image frames; determining a first detection result based on the N-1 first differential image frames, and determining a second detection result based on the second differential image; and determining a living face detection result in the video based on the first detection result and the second detection result.

## Description

### TECHNICAL FIELD

The disclosure relates to the field of artificial intelligence technology, specifically the technical fields of computer vision and deep learning, which can be applied to scenarios such as face recognition, in particular to a method for detecting a living face, an apparatus for detecting a living face, an electronic device and a storage medium.

### BACKGROUND

Living face detection is to distinguish whether a face in an image is a forged face, which is a basic component module of a face recognition system and ensures the security of the face recognition system. The face deepfakes identification algorithm based on deep learning technology is currently the mainstream method in this field. However, in some application scenarios, the face deepfakes identification algorithm based on deep learning technology has poor generalization, and the effect of identifying unknown forged samples and forgery ways is reduced, which affects the performance of practical applications.

### SUMMARY

Embodiments of the disclosure provide a method for detecting a living face, an apparatus for detecting a living face, an electronic device and a storage medium.

According to a first aspect, a method for detecting a living face is provided. The method includes:
obtaining consecutive N image frames in a video, and obtaining N face image frames by performing face alignment processing on the N image frames, in which N is an integer greater than 1;
obtaining N-1 first differential image frames by performing differential calculation on two adjacent frames of the N face image frames;
obtaining a second differential image by performing differential calculation on the N^{th} image frame and the first image frame in the N image frames;
determining a first detection result based on the N-1 first differential image frames, and determining a second detection result based on the second differential image; and
determining a living face detection result in the video based on the first detection result and the second detection result.

According to a second aspect, an apparatus for detecting a living face is provided. The apparatus includes: an obtaining module, a first differential module, a second differential module, a first determining module and a second determining module.

The obtaining module is configured to obtain consecutive N image frames in a video, and obtain N face image frames by performing face alignment processing on the N image frames, N is an integer greater than 1.

The first differential module is configured to obtain N-1 first differential image frames by performing differential calculation on two adjacent frames of the N face image frames.

The second differential module is configured to obtain a second differential image by performing differential calculation on the N^{th} image frame and the first image frame in the N image frames.

The first determining module is configured to determine a first detection result based on the N-1 first differential image frames, and determine a second detection result based on the second differential image.

The second determining module is configured to determine a living face detection result in the video based on the first detection result and the second detection result.

According to a third aspect, an electronic device is provided. The electronic device includes: at least one processor and a memory communicatively coupled to the at least one processor. The memory is stored with instructions executable by the at least one processor, and when the instructions are executed by the at least one processor, the at least one processor is enabled to execute the method according to the first aspect of the disclosure.

According to a fourth aspect, a non-transitory computer-readable storage medium storing computer instructions is provided. The computer instructions are configured to cause a computer to execute the method according to the first aspect of the disclosure.

According to a fifth aspect, a computer program product including a computer program is provided. When the computer program is executed by a processor, the method according to the first aspect of the disclosure is executed.

According to the technical solution of the disclosure, for the existing face forging technologies, the differential calculation is performed on two adjacent frames in the consecutive face image frames in the video, and the corresponding detection result is determined according to the differential images, which is equivalent to determining the corresponding detection result according to the continuity of the face images in the time dimension, so as to effectively avoid face forging with poor continuity in the time dimension. In addition, the differential image obtained by performing differential calculation processing on the first frame and the last frame in the video is determined as the basis for detection, which is equivalent to taking into account the degree of change of the background in the video. In this way, face forging technologies that only process the face area and keep the background unchanged can be effectively avoided, the performance of living face detection technologies can be improved to ensure the safety of the face recognition system, and moreover, the effect and experience of many applications based on the living face detection technologies can be improved.

It should be understood that the content described in this section is not intended to identify key or important features of the embodiments of the disclosure, nor is it intended to limit the scope of the disclosure. Additional features of the disclosure will be easily understood based on the following description.

### BRIEF DESCRIPTION OF THE DRAWINGS

The drawings are used to better understand the solution and do not constitute a limitation to the disclosure, in which:
FIG. 1 is a flowchart of a method for detecting a living face according to an embodiment of the disclosure.
FIG. 2 is a flowchart of determining a living face detection result in a video according to an embodiment of the disclosure.
FIG. 3 is a flowchart of another method for detecting a living face according to an embodiment of the disclosure.
FIG. 4 is a schematic diagram of a network structure of a model for detecting a living face according to an embodiment of the disclosure.
FIG. 5 is a schematic diagram of an apparatus for detecting a living face according to an embodiment of the disclosure.
FIG. 6 is a block diagram of another apparatus for detecting a living face according to an embodiment of the disclosure.
FIG. 7 is a block diagram of an electronic device according to an embodiment of the disclosure.

### DETAILED DESCRIPTION

The following describes the exemplary embodiments of the disclosure with reference to the accompanying drawings, which includes various details of the embodiments of the disclosure to facilitate understanding, which shall be considered merely exemplary. Therefore, those of ordinary skill in the art should recognize that various changes and modifications can be made to the embodiments described herein. For clarity and conciseness, descriptions of well-known functions and structures are omitted in the following description.

It should be noted that living face detection is to distinguish whether a face in an image is a forged face, which is a basic component module of a face recognition system and ensures the security of the face recognition system. The existing methods for detecting a living face mainly depend on the deep learning method of neural network. The methods for detecting a living face based on deep learning mainly include the method for identifying forged video based on convolutional neural network, and the method for identifying forged video based on long-short-term memory artificial neural network. The above methods use neural networks for facial feature extraction and classification. Deep learning methods can extract more stable facial features and have better performance.

However, in the related art, the method for detecting a living face has limited generalization to unknown forgery ways and forged samples. In addition, since the timing sequence information of video frames is not considered, the robustness of video forging of real scenes is poor, which may cause unsatisfied recognition effect.

In addition, the inventors of the disclosure founded according to the research on the existing face forging technologies that most mainstream face forging technologies such as Face2Face, DeepFakes, FaceSwap, are methods based on single frame processing. In the methods, the face of another person is attached above the original face to complete the forged face, thus the generated forged video may have no continuity in the time dimension. Especially, in the process of moving the face, a certain frame may have poor forging effect, while the real face will not change greatly between two frames. In addition, deep forging technologies such as FOM that only drive facial expressions only process the face area, and keep the background unchanged.

Therefore, based on the above problems and findings, the disclosure provides differential images between face video frames, and a method for detecting a living face, an apparatus for detecting a living face, an electronic device and a storage medium, to determine a living face detection result according to the differential images.

In order to facilitate the understanding of the embodiments of the disclosure, a method for detecting a living face is introduced firstly.

It should be noted that, in the technical solution of the disclosure, the acquisition, storage, and application of the user's personal information involved all comply with the provisions of relevant laws and regulations, and do not violate public order and good customs. The personal information of the user involved is obtained, stored and applied with the consent of the user.

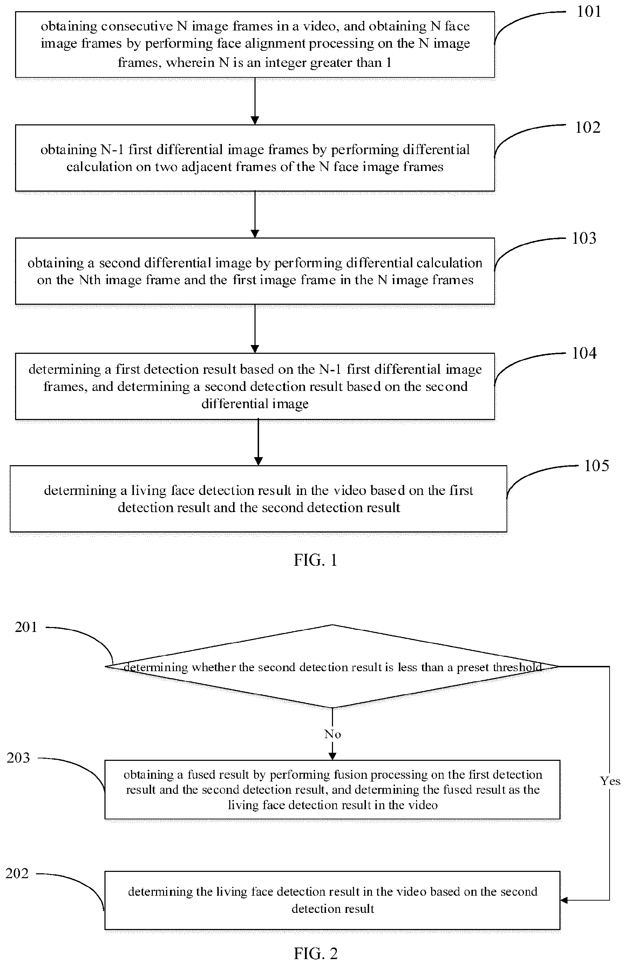

FIG. 1 is a flowchart of a method for detecting a living face according to an embodiment of the disclosure. It should be noted that, the method for detecting a living face in the embodiments of the disclosure may be applied to the apparatus for detecting a living face in the embodiments of the disclosure, and the apparatus may be configured in an electronic device. As illustrated in FIG. 1, the method includes the following steps.

In step 101, consecutive N image frames in a video are obtained, and N face image frames are obtained by performing face alignment processing on the N image frames, N is an integer greater than 1.

Generally, a terminal device that performs face recognition may be configured with a camera, and when performing face recognition, the camera of the terminal device will be triggered to shoot a video, and face recognition is performed according to the captured video. In this embodiment of the disclosure, the video may be captured by a face recognition system through the camera configured on the terminal. It should be noted that the video needs to include face information, so that the video shot by the terminal camera can be verified. In response to that the video does not contain face information, it is necessary to re-shot and verify.

In addition, if a number of frames in the video is greater than N, consecutive N frames may be taken as consecutive N image frames in the video. If the number of frames in the video is N, the N frames corresponding to the video are determined as the N consecutive image frames in the video. It should be noted that each of the N image frames contains the human face.

In embodiments of the disclosure, in order to facilitate the subsequent face alignment operation, N image frames may be preprocessed to obtain areas corresponding to the face. As an example, each image frame in the N image frames may be detected by a detection model, to obtain a location area of the human face in each image. The detection model is an existing face detection model, which is configured to detect the position of the face.

According to the detected face position, face alignment is performed on the N image frames, to obtain the N face image frames. As an example, according to the detected face area, face key points can be detected by a face key point detection model, to obtain coordinate values corresponding to the face key points. The face key point detection model is an existing model, N image frames of the detected face area are input into the model, to obtain 72 face key point coordinates, which are (x₁, y₁) ... (x₇₂, y₇₂). The target face is aligned according to the coordinate values corresponding to the face key points to obtain the corresponding face image. In detail, in the alignment process, the minimum value xₘᵢₙ in the x-coordinate values, the maximum value xₘₐₓ in the x-coordinate values, the minimum value yₘᵢₙ in the y-coordinate values and the maximum value yₘₐₓ in the y-coordinate values are obtained according to above 72 face key point coordinates, so that a face box can be determined according to the coordinates of the four points. The determined face box is expanded by two times and then the face image is intercepted, and the face image is adjusted according to the size of 224^{∗}224, to obtain N face image frames.

In step 102, N-1 first differential image frames are obtained by performing differential calculation on two adjacent frames of the N face image frames.

It can be understood that the real face video barely changes between two frames, while the forged face video has poor continuity in the time dimension since processing is only based on a single frame. Therefore, the differential calculation is performed on two adjacent frames in the N face image frames, that is, the difference between two adjacent frames in the N face image frames is calculated, and the obtained differential images can represent the continuity of the face video in the time dimension, and the authenticity of the face in the video can be further determined.

For example, the differential processing can be performed on the rear frame and the previous frame of the two adjacent frames in the N face image frames. One differential image can be obtained by performing the differential processing on every two face image frames, so N-1 first differential image frames can be obtained from the N face image frames.

In step 103, a second differential image is obtained by performing differential calculation on the N^{th} image frame and the first image frame in the N image frames.

In the existing face forging technology, there is a Deepfake technology that only drives the facial expression, which means that the technology only forges the face area, while the background information remains unchanged. That is, whether the background information in the N image frames is consistent can be used as the basis for judging the authenticity of the face in the video.

In embodiments of the disclosure, the second differential image is obtained by performing differential processing on the N^{th} frame image and the first frame image in the N image frames that is, the second differential image is obtained by obtaining the difference between the N^{th} frame image and the first frame image in the N image frames. The second differential image is used to represent the degree of change of the background information in the N image frames.

In step 104, a first detection result is determined based on the N-1 first differential image frames, and a second detection result is determined based on the second differential image.

It can be understood that the N-1 first differential image frames can represent the change of the face information in the video between two adjacent frames. That is, the greater the face information represented by the first differential image changes between the two adjacent frames, the more likely the face in this video is forged. Moreover, the second differential image can represent the change of the background information in the video, that is, the greater the change of the background information in the video represented by the second differential image, the more likely the face in this video is forged.

For example, determining the first detection result based on the N-1 first differential image frames includes: obtaining spatiotemporal feature vectors of the N-1 first differential image frames by performing spatiotemporal feature extraction on the N-1 first differential image frames, for example, performing spatiotemporal feature extraction on the N-1 first differential image frames through a trained 3D convolutional neural network; obtaining a first weighted result by performing weighted calculation on the spatiotemporal feature vectors and integrating the spatiotemporal feature information; and obtaining the first detection result by performing normalization processing on the first weighted result. In addition, determining the second detection result based on the second differential image includes: obtaining first feature vectors by performing feature extraction on the second differential image, for example, performing feature extraction on the second differential image using a convolutional neural network; obtaining a second weighted result by performing weighted calculation on the first feature vectors; and obtaining the second detection result by performing normalization processing on the second weighted result. The first detection result and the second detection result may be the probability that the face in the video is a real human face, or may be a dichotomous classification result, which respectively represent the probability that the face in the video is a real human face and the probability that the face in the video is not a real human face, or other forms that can represent detection results.

For another example, the first differential images can be divided according to scores, the higher the score, the greater the change of the face information in the two adjacent image frames. The probability of detecting a living face in the video is calculated according to the scores of the N-1 first differential image frames, and the probability value is determined as the first detection result. Moreover, the second differential image is also divided according to the score. The greater the score, the greater the change of the background information. The score is corresponding to the probability of detecting a living face, to obtain the second detection result.

In step 105, a living face detection result in the video is determined based on the first detection result and the second detection result.

It can be understood that the existing face forging technologies include the face forging method by face fitting based on a single image frame, and the method that forges only the face area and keep the background unchanged. Therefore, determining the living face detection result in the video according to the first detection result and the second detection result can effectively improve the effect and accuracy of detecting the living face.

For example, the first detection result and the second detection result can be fused by, for example, averaging processing, weighted average processing, and the fused result is determined as the living face detection result in the video.

According to the method for detecting a living face of the disclosure, for the existing face forging technologies, the differential calculation is performed on two adjacent frames in the consecutive face image frames in the video, and the corresponding detection result is determined according to the differential images, which is equivalent to determining the corresponding detection result according to the continuity of the face images in the time dimension, so as to effectively avoid face forging with poor continuity in the time dimension. In addition, the differential image obtained by performing differential calculation processing on the first frame and the last frame in the video is determined as the basis for detection, which is equivalent to taking into account the degree of change of the background in the video. In this way, face forging technologies that only process the face area and keep the background unchanged can be effectively avoided, the performance of living face detection technologies can be improved to ensure the safety of the face recognition system, and the effect and experience of many applications based on the living face detection technologies can be improved at the same time.

In order to more effectively determine the living face detection result in the video, on the basis of the above embodiment, the disclosure provides another embodiment.

FIG. 2 is a flowchart of determining a living face detection result in a video according to an embodiment of the disclosure. As illustrated in FIG. 2, determining the living face detection result in the video can be implemented as follows.

In step 201, it is determined whether the second detection result is less than a preset threshold.

It can be understood that the second detection result is obtained according to the second differential image. That is, the change of background information in consecutive N image frames is obtained by performing calculation on the second differential image, and the second detection result is obtained according to the change of the background information. If the probability of detecting a living face in the video in the second detection result is small, that is, the background information in the video is almost unchanged, it can be determined that the face in the current video is forged.

In an embodiment of the disclosure, the second detection result is the probability of detecting a living face in the video, and the preset threshold refers to the threshold of the probability of detecting a living face in the video in the second detection result. The magnitude of the threshold can be determined through multiple experiments according to the actual situation. It can be understood that the threshold can be determined as the limit of whether it is possible to determine the living face detection result directly according to the second detection result. In response to the second detection result being less than the threshold, it indicates that the probability of detecting a living face in the video is extremely small, and it can be determined directly that the face in the living face detection result in the video is a non-living face. In response to the second detection result being greater than or equal to the threshold, it indicates that the face in the video may be real or fake, and further determination needs to be made in combination with the first detection result. In this way, the second detection result is determined as a preliminary judgment for determining the living face detection result, which can reduce the computing amount for determining the restrained living face detection result in the video, and improve the result output efficiency.

In step 202, in response to the second detection result being less than the preset threshold, the living face detection result in the video is determined based on the second detection result.

That is, in response to the probability of detecting a living face in the video corresponding to the second detection result being less than the preset threshold, the living face detection result in the video can be determined directly according to the second detection result.

For example, if the second detection result is that the probability of detecting a living face in the video is 0.05, and the preset threshold is 0.1, that is, the second detection result is less than the preset threshold, at this time, it can be determined directly according to the second detection result that the living face detection result in the video is a non-living face.

In step 203, in response to the second detection result being greater than or equal to the preset threshold, a fused result is obtained by performing fusion processing on the first detection result and the second detection result, and the fused result is determined as the living face detection result in the video.

That is, in response to the probability of detecting a living face in the video corresponding to the second detection result being greater than or equal to the preset threshold, the face in the video may be a real human face or a forged face, the living face detection result in the video cannot be determined only according to the second detection result, and it needs to be further determined in combination with the first detection result.

In the embodiment of the disclosure, obtaining the fused result by performing fusion processing on the first detection result and the second detection result, and determining the fused result as the living face detection result in the video, includes: obtaining an average result by averaging the first detection result and the second detection result, and determining the average result as the living face detection result in the video; or, obtaining a weighted average result by performing weighted average processing on the first detection result and the second detection result, and determining the weighted average result as the living face detection result in the video.

In another embodiment, the first detection result and the second detection result may be dichotomous classification results, in which a first classification result represents a probability of detecting a living face in the video, and a second classification result represents a probability of detecting a non-living face in the video. In step 201, it is determined whether the first classification result in the second detection result is less than the preset threshold. In step 202, in response to the first classification result in the second detection result being less than the preset threshold, the living face detection result in the video is determined based on the second detection result. In step 203, in response to the first classification result in the second detection result being greater than or equal to the preset threshold, the fused result is obtained by performing fusion processing on the first detection result and the second detection result, and the fused result is determined as the living face detection result in the video.

According to the method for detecting a living face according to an embodiment of the disclosure, when determining the living face detection result in the video, firstly, the second detection result is compared with the preset threshold, which serves as a preliminary judgment on determining the living face detection result in the video. In response to the second detection result being less than the threshold, the second detection result is directly determined as the living face detection result, that is, the living face detection result in the video is directly determined as a non-living face, otherwise, it is further determined in combination with the first detection result. In this way, the computing amount for determining the living face detection result in the video can be effectively reduced, and the result output efficiency can be improved.

In order to reduce the interference of light and the like on the image pixel value, and to eliminate the influence of geometric transformation on the image, the normalization processing on the image is added in the embodiment of the disclosure.

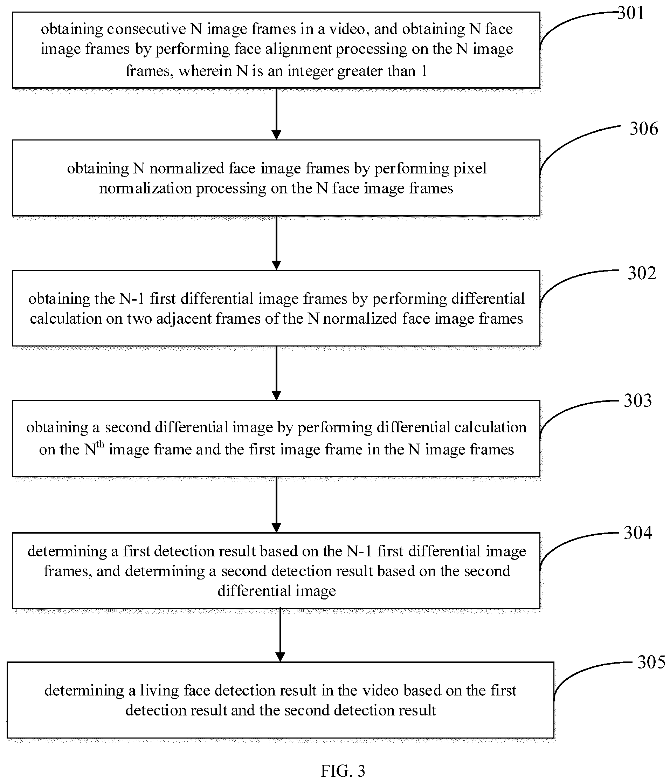

FIG. 3 is a flowchart of another method for detecting a living face according to an embodiment of the disclosure. On the basis of above embodiments, as illustrated in FIG. 3, this method further includes the following steps.

In step 306, N normalized face image frames are obtained by performing pixel normalization processing on the N face image frames.

It should be noted that the basic idea of normalization is to use the invariant moment of the image to find a set of parameters that can eliminate the influence of other transformation functions on image transformation, that is, to convert into a unique standard form to resist affine transformation. The pixel normalization of the image can make the image resist the attack of geometric transformation and reduce the interference of pixel values caused by uneven light.

As an example, the implementation of performing pixel normalization processing on N face image frames includes: subtracting 128 from the pixel value of each pixel of the image, and dividing each value by 256, so that the pixel value of each pixel is between [-0.5, 0.5].

In step 302, the N-1 first differential image frames are obtained by performing differential calculation on two adjacent frames of the N normalized face image frames.

It should be noted that steps 301 to 305 in FIG. 3 have the same implementation as steps 101 to 105 in FIG. 1, and details are not repeated here.

According to the method for detecting a living face according to an embodiment of the disclosure, pixel normalization processing is performed on the face images, the interference of pixel values caused by uneven light can be effectively reduced, so that the images can be deducted from the attack of geometric transformation, and the accuracy of living face detection can be improved.

Based on the above embodiments, the process of determining the first detection result according to the N-1 first differential image frames, and the process of determining the second detection result according to the second differential image can be realized by a model for detecting a living face.

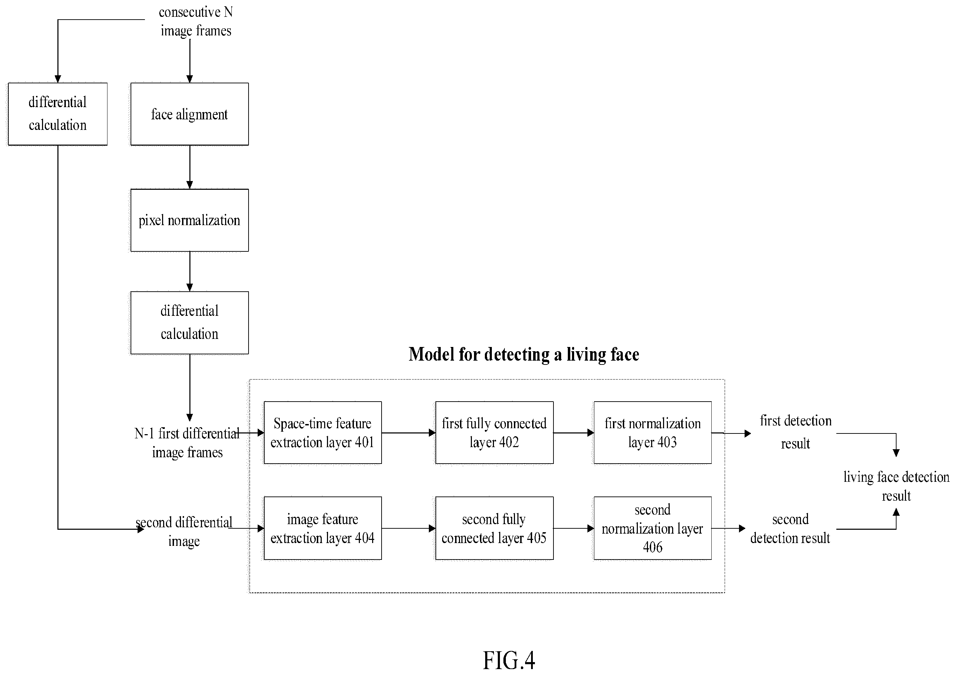

FIG. 4 is a schematic diagram of a network structure of a model for detecting a living face according to an embodiment of the disclosure. As illustrated in FIG. 4, the model includes a spatiotemporal feature extraction layer 401, a first fully connected layer 402, a first normalization layer 403, an image feature extraction layer 404, a second fully connected layer 405 and a second normalization layer 406. The model is pre-trained by continuous N image frame samples of a video containing a real human face and continuous N image frame samples of a video containing a forged face.

In detail, the N-1 first differential image frames are input to the spatiotemporal feature extraction layer 401 for spatiotemporal feature extraction, to obtain the spatiotemporal feature vectors of the N-1 first differential image frames. The spatiotemporal feature extraction layer may be a I3D convolutional neural network or other network models that can extract spatiotemporal features. The spatiotemporal feature vectors are input into the first fully connected layer 402 for weighted calculation, to obtain the first weighted result. The first weighted result is input into the first normalization layer 403 for normalization, to obtain the first detection result, and the normalization layer 403 may be a softmax layer.

In addition, the second differential image is input to the image feature extraction layer 404 for feature extraction, to obtain the first feature vectors. The image feature extraction layer 404 may be a MobileNet V2 convolutional neural network, or other convolutional neural network models. The first feature vectors are input into the second fully connected layer 405 for weighted calculation to obtain the second weighted result. The obtained second weighted result is input into the second normalization layer 406 for normalization processing, to obtain the second detection result.

In the embodiment of the disclosure, the training mode of this model includes: obtaining consecutive N image frame samples in a video, in which the N image frame samples include N continuous image frame samples of a video containing a real human face and N continuous image frame samples of a video containing a forged face; obtaining N face image frame samples by performing face alignment processing on the N image frame samples; obtaining N normalized face image frames by performing pixel normalization processing on the N face image frame samples, and performing random data augmentation; for each group of N face image frames in N face image frame samples, obtaining the N-1 first differential image frame samples by performing differential calculation on two adjacent frames; for each group of N face image frames in N face image frame samples, obtaining a second differential image sample by performing differential calculation on the N^{th} image frame and the first image frame; inputting the N-1 first differential image frame samples to the spatiotemporal feature extraction layer of the living face detection model for spatiotemporal feature extraction, inputting the information extracted by the spatiotemporal feature extraction layer into the first fully connected layer for weighted calculation, and normalizing the obtained weighted calculation result through the first normalization layer to obtain the first prediction result; inputting the second differential image sample into the image feature extraction layer for feature extraction, inputting the extracted information to the second fully connected layer for weighted calculation, and normalizing the obtained weighted calculation result through the second normalization layer to obtain the second prediction result; and calculating a corresponding loss value according to the first prediction result and the second prediction result, so as to train the living face detection model.

According to the method for detecting a living face according to the embodiment of the disclosure, feature extraction and classification calculation are respectively performed on the obtained differential images through the living face detection model, to obtain the corresponding detection result, which is equivalent to using the living face detection model to extract more discriminative features in the video containing a living face and the video containing a forged face for classification and detection, which can effectively improve the generalization and accuracy of living face detection, and can also improve detection efficiency. In addition, the face detection model is trained by the differential images obtained from continuous frame image samples of the video containing a living face and continuous frame image samples of the video containing a forged face, which can speed up the convergence speed of network training and improve the efficiency of model training.

In order to realize the above embodiments, the disclosure provides an apparatus for detecting a living face.

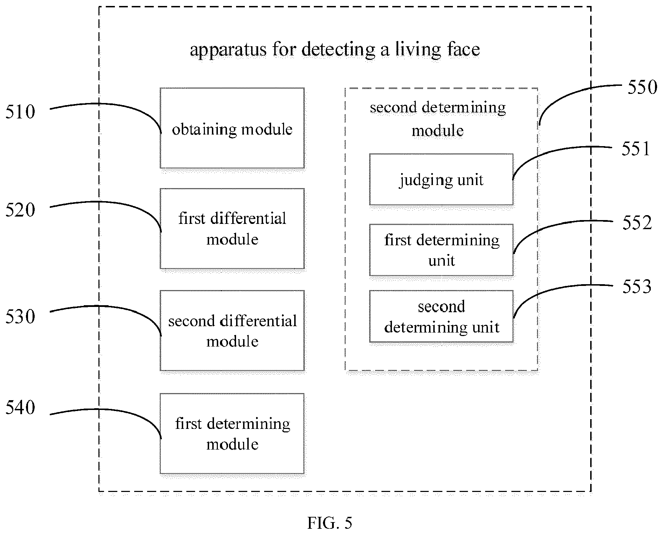

FIG. 5 is a block diagram of an apparatus for detecting a living face according to an embodiment of the disclosure. As illustrated in FIG. 5, the apparatus includes: an obtaining module 510, a first differential module 520, a second differential module 530, a first determining module 540 and a second determining module 550.

The obtaining module 510 is configured to obtain consecutive N image frames in a video, and obtain N face image frames by performing face alignment processing on the N image frames, N is an integer greater than 1.

The first differential module 520 is configured to obtain N-1 first differential image frames by performing differential calculation on two adjacent frames of the N face image frames.

The second differential module 530 is configured to obtain a second differential image by performing differential calculation on the N^{th} image frame and the first image frame in the N image frames.

The first determining module 540 is configured to determine a first detection result based on the N-1 first differential image frames, and determine a second detection result based on the second differential image.

The second determining module 550 is configured to determine a living face detection result in the video based on the first detection result and the second detection result.

In some embodiments, the first determining module 540 is further configured to:
obtain spatiotemporal feature vectors of the N-1 first differential image frames by performing spatiotemporal feature extraction on the N-1 first differential image frames;
obtain a first weighted result by performing weighted calculation on the spatiotemporal feature vectors; and
obtain the first detection result by performing normalization processing on the first weighted result.

In some embodiments, the first determining module 540 is further configured to:
obtain first feature vectors by performing feature extraction on the second differential image;
obtain a second weighted result by performing weighted calculation on the first feature vectors; and
obtain the second detection result by performing normalization processing on the second weighted result.

In some embodiments, the second determining module 550 further includes: a judging unit 551, a first determining unit 552 and a second determining unit 553.

The judging unit 551 is configured to determine whether the second detection result is less than a preset threshold.

The first determining unit 552 is configured to, in response to the second detection result being less than the preset threshold, determine the living face detection result in the video based on the second detection result.

The second determining unit 553 is configured to, in response to the second detection result being greater than or equal to the preset threshold, obtain a fused result by performing fusion processing on the first detection result and the second detection result, and determine the fused result as the living face detection result in the video.

The second determining unit 553 is further configured to:
obtain an average result by averaging the first detection result and the second detection result, and determine the average result as the living face detection result in the video; or,
obtain a weighted average result by performing weighted average processing on the first detection result and the second detection result, and determine the weighted average result as the living face detection result in the video.

In some embodiments, the first detection result and the second detection result are dichotomous classification results, in which a first classification result represents a probability of detecting a living face in the video, and a second classification result represents a probability of detecting a non-living face in the video.

The judging unit 551 is further configured to determine whether the first classification result in the second detection result is less than the preset threshold.

The first determining unit 552 is further configured to, in response to the first classification result in the second detection result being less than the preset threshold, determine the living face detection result in the video based on the second detection result.

The second determining unit 553 is further configured to, in response to the first classification result in the second detection result being greater than or equal to the preset threshold, obtain the fused result by performing fusion processing on the first detection result and the second detection result, and determine the fused result as the living face detection result in the video.

With the apparatus for detecting a living face according to the embodiments of the disclosure, for the existing face forging technologies, the differential calculation is performed on two adjacent frames in the consecutive face image frames in the video, and the corresponding detection result is determined according to the differential images, which is equivalent to determining the corresponding detection result according to the continuity of the face images in the time dimension, so as to effectively avoid face forging with poor continuity in the time dimension. In addition, the differential image obtained by performing differential calculation processing on the first frame and the last frame in the video is determined as the basis for detection, which is equivalent to taking into account the degree of change of the background in the video. In this way, face forging technologies that only process the face area and keep the background unchanged can be effectively avoided, the performance of living face detection technologies can be improved to ensure the safety of the face recognition system, and the effect and experience of many applications based on the living face detection technologies can be improved at the same time.

In order to reduce the interference of light and the like on the image pixel value, and to eliminate the influence of geometric transformation on the image, the disclosure provides another apparatus for detecting a living face.

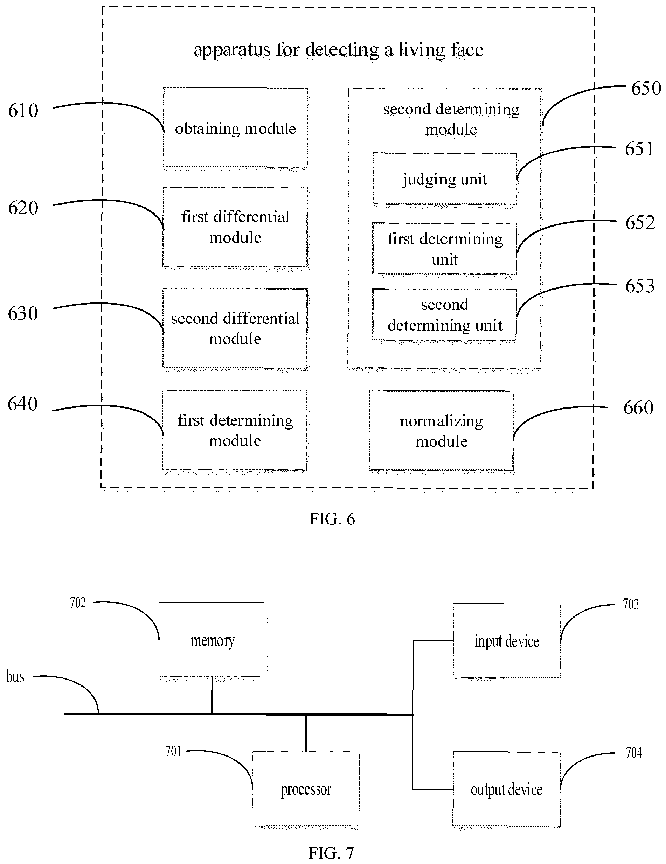

FIG. 6 is a block diagram of an apparatus for detecting a living face according to an embodiment of the disclosure. On the basis of the above embodiments, as illustrated in FIG. 6, the apparatus includes: a normalizing module 660, configured to obtain N normalized face image frames by performing pixel normalization processing on the N face image frames.

The first differential module 620 is further configured to obtain the N-1 first differential image frames by performing differential calculation on two adjacent frames of the N normalized face image frames.

It should be noted that 610 to 650 in FIG. 6 have the same functions and structures as 510 to 550 in FIG. 5, and details are not described herein again.

Regarding the apparatus in the above embodiments, the specific manner in which each module performs operations has been described in detail in the embodiments of the method, and will not be described in detail here.

With the apparatus for detecting a living face according to an embodiment of the disclosure, pixel normalization processing is performed on the face images, the interference of pixel values caused by uneven light can be effectively reduced, so that the images can be deducted from the attack of geometric transformation, and the accuracy of living face detection can be improved.

According to the embodiments of the disclosure, the disclosure also provides an electronic device, a readable storage medium and a computer program product.

FIG. 10 is a block diagram of an electronic device used to implement the method for detecting a living face according to the embodiments of the disclosure. Electronic devices are intended to represent various forms of digital computers, such as laptop computers, desktop computers, workbenches, personal digital assistants, servers, blade servers, mainframe computers, and other suitable computers. Electronic devices may also represent various forms of mobile devices, such as personal digital processing, cellular phones, smart phones, wearable devices, and other similar computing devices. The components shown here, their connections and relations, and their functions are merely examples, and are not intended to limit the implementation of the disclosure described and/or required herein.

As illustrated in FIG. 7, the electronic device includes: one or more processors 701, a memory 702, and interfaces for connecting various components, including a high-speed interface and a low-speed interface. The various components are interconnected using different buses and can be mounted on a common mainboard or otherwise installed as required. The processor may process instructions executed within the electronic device, including instructions stored in or on the memory to display graphical information of the GUI on an external input/output device such as a display device coupled to the interface. In other embodiments, a plurality of processors and/or buses can be used with a plurality of memories and processors, if desired. Similarly, a plurality of electronic devices can be connected, each providing some of the necessary operations (for example, as a server array, a group of blade servers, or a multiprocessor system). A processor 701 is taken as an example in FIG. 7.

The memory 702 is a non-transitory computer-readable storage medium according to the disclosure. The memory stores instructions executable by at least one processor, so that the at least one processor executes the method according to the disclosure. The non-transitory computer-readable storage medium of the disclosure stores computer instructions, which are used to cause a computer to execute the method according to the disclosure.

As a non-transitory computer-readable storage medium, the memory 702 is configured to store non-transitory software programs, non-transitory computer-executable programs and modules, such as program instructions/modules corresponding to the method for detecting a living face according to the embodiments of the disclosure (for example, the obtaining module 510, the first differential module 520, the second differential module 530, the first determining module 540 and the second determining module 550 shown in FIG. 5). The processor 701 executes various functional applications and data processing of the server by running the non-transitory software programs, instructions, and modules stored in the memory 702, to implement the method in the above method embodiments. The embodiment of the disclosure provides a computer program product including computer programs, when the computer programs are executed by a processor, the method for detecting a living face in the above method embodiments is implemented.

The memory 702 may include a storage program area and a storage data area, where the storage program area may store an operating system and application programs required for at least one function. The storage data area may store data created according to the use of the electronic device for implementing the method. In addition, the memory 702 may include a high-speed random access memory, and a non-transitory memory, such as at least one magnetic disk storage device, a flash memory device, or other non-transitory solid-state storage device. In some embodiments, the memory 702 may optionally include a memory remotely disposed with respect to the processor 701, and these remote memories may be connected to the electronic device for implementing the method through a network. Examples of the above network include, but are not limited to, the Internet, an intranet, a local area network, a mobile communication network, and combinations thereof.

The electronic device for implementing the method for detecting a living face may further include: an input device 703 and an output device 704. The processor 701, the memory 702, the input device 703 and the output device 704 may be connected by a bus or in other ways, and the connection by a bus is taken as an example in FIG. 7.

The input device 703 may receive inputted numeric or character information, and generate key signal inputs related to user settings and function control of an electronic device for implementing the method, such as a touch screen, a keypad, a mouse, a trackpad, a touchpad, an indication rod, one or more mouse buttons, trackballs, joysticks and other input devices. The output device 704 may include a display device, an auxiliary lighting device (for example, an LED), a haptic feedback device (for example, a vibration motor), and the like. The display device may include, but is not limited to, a liquid crystal display (LCD), a light emitting diode (LED) display, and a plasma display. In some embodiments, the display device may be a touch screen.

Various embodiments of the systems and technologies described herein may be implemented in digital electronic circuit systems, integrated circuit systems, application specific integrated circuits (ASICs), computer hardware, firmware, software, and/or combinations thereof. These various embodiments may be implemented in one or more computer programs, which may be executed and/or interpreted on a programmable system including at least one programmable processor. That is, the disclosure also provides a computer program, when the computer program is executed by a processor, the method for estimating a delay of a smart rearview mirror described in the above embodiments is implemented. The programmable processor may be dedicated or general purpose programmable processor that receives data and instructions from a storage system, at least one input device, and at least one output device, and transmits the data and instructions to the storage system, the at least one input device, and the at least one output device.

These computing programs (also known as programs, software, software applications, or code) include machine instructions of a programmable processor and may utilize high-level processes and/or object-oriented programming languages, and/or assembly/machine languages to implement these calculation procedures. As used herein, the terms "machine-readable medium" and "computer-readable medium" refer to any computer program product, device, and/or device used to provide machine instructions and/or data to a programmable processor (for example, magnetic disks, optical disks, memories, programmable logic devices (PLDs), including machine-readable media that receive machine instructions as machine-readable signals. The term "machine-readable signal" refers to any signal used to provide machine instructions and/or data to a programmable processor.

In order to provide interaction with a user, the systems and techniques described herein may be implemented on a computer having a display device (e.g., a Cathode Ray Tube (CRT) or a Liquid Crystal Display (LCD) monitor for displaying information to a user); and a keyboard and pointing device (such as a mouse or trackball) through which the user can provide input to the computer. Other kinds of devices may also be used to provide interaction with the user. For example, the feedback provided to the user may be any form of sensory feedback (e.g., visual feedback, auditory feedback, or haptic feedback), and the input from the user may be received in any form (including acoustic input, voice input, or tactile input).

The systems and technologies described herein can be implemented in a computing system that includes background components (for example, a data server), or a computing system that includes middleware components (for example, an application server), or a computing system that includes front-end components (for example, a user computer with a graphical user interface or a web browser, through which the user can interact with the implementation of the systems and technologies described herein), or a computing system that includes any combination of such background components, intermediate computing components, or front-end components. The components of the system may be interconnected by any form or medium of digital data communication (e.g., a communication network). Examples of communication networks include: a local area network (LAN), a wide area network (WAN), the Internet and a block-chain network.

The computer system may include a client and a server. The client and server are generally remote from each other and interacting through a communication network. The client-server relation is generated by computer programs running on the respective computers and having a client-server relation with each other. The server may be a cloud server, also known as a cloud computing server or a cloud host, which is a host product in the cloud computing service system, to solve defects such as difficult management and weak business scalability in the traditional physical host and Virtual Private Server (VPS) service. The server may also be a server of a distributed system, or a server combined with a block-chain.

It should be understood that the various forms of processes shown above can be used to reorder, add or delete steps. For example, the steps described in the disclosure could be performed in parallel, sequentially, or in a different order, as long as the desired result of the technical solution disclosed in the disclosure is achieved, which is not limited herein.

The above specific embodiments do not constitute a limitation on the protection scope of the disclosure. Those skilled in the art should understand that various modifications, combinations, sub-combinations and substitutions can be made according to design requirements and other factors.

## Claims

1. A method for detecting a living face, comprising:
obtaining consecutive N image frames in a video, and obtaining N face image frames by performing face alignment processing on the N image frames, wherein N is an integer greater than 1 (101; 301);
obtaining N-1 first differential image frames by performing differential calculation on two adjacent frames of the N face image frames (102);
obtaining a second differential image by performing differential calculation on the N^{th} image frame and the first image frame in the N image frames (103; 303);
determining a first detection result based on the N-1 first differential image frames, and determining a second detection result based on the second differential image (104; 304); and
determining a living face detection result in the video based on the first detection result and the second detection result (105; 305).

2. The method of claim 1, wherein determining the first detection result based on the N-1 first differential image frames, comprises:
obtaining spatiotemporal feature vectors of the N-1 first differential image frames by performing spatiotemporal feature extraction on the N-1 first differential image frames;
obtaining a first weighted result by performing weighted calculation on the spatiotemporal feature vectors; and
obtaining the first detection result by performing normalization processing on the first weighted result.

3. The method of claim 1, wherein determining the second detection result based on the second differential image comprises:
obtaining first feature vectors by performing feature extraction on the second differential image;
obtaining a second weighted result by performing weighted calculation on the first feature vectors; and
obtaining the second detection result by performing normalization processing on the second weighted result.

4. The method of any of claims 1-3, wherein determining the living face detection result in the video based on the first detection result and the second detection result (105; 305), comprises:
determining whether the second detection result is less than a preset threshold (201);
in response to the second detection result being less than the preset threshold, determining the living face detection result in the video based on the second detection result (202); and
in response to the second detection result being greater than or equal to the preset threshold, obtaining a fused result by performing fusion processing on the first detection result and the second detection result, and determining the fused result as the living face detection result in the video (203).

5. The method of claim 4, wherein obtaining the fused result by performing fusion processing on the first detection result and the second detection result, and determining the fused result as the living face detection result in the video (203), comprises:
obtaining an average result by averaging the first detection result and the second detection result, and determining the average result as the living face detection result in the video; or,
obtaining a weighted average result by performing weighted average processing on the first detection result and the second detection result, and determining the weighted average result as the living face detection result in the video.

6. The method of claim 4, wherein, the first detection result and the second detection result are dichotomous classification results, in which a first classification result represents a probability of detecting a living face in the video, and a second classification result represents a probability of detecting a non-living face in the video, determining the living face detection result in the video based on the first detection result and the second detection result, comprises:
determining whether the first classification result in the second detection result is less than a preset threshold;
in response to the first classification result in the second detection result being less than the preset threshold, determining the living face detection result in the video based on the second detection result; and
in response to the first classification result in the second detection result being greater than or equal to the preset threshold, obtaining the fused result by performing fusion processing on the first detection result and the second detection result, and determining the fused result as the living face detection result in the video.

7. The method of any of claims 1-6, wherein obtaining the N-1 first differential image frames by performing differential calculation on two adjacent frames of the N face image frames (102), comprises:
obtaining N normalized face image frames by performing pixel normalization processing on the N face image frames (306); and
obtaining the N-1 first differential image frames by performing differential calculation on two adjacent frames of the N normalized face image frames (302).

8. An apparatus for detecting a living face, comprising:
an obtaining module (510; 610), configured to obtain consecutive N image frames in a video, and obtain N face image frames by performing face alignment processing on the N image frames, wherein N is an integer greater than 1;
a first differential module (520; 620), configured to obtain N-1 first differential image frames by performing differential calculation on two adjacent frames of the N face image frames;
a second differential module (530; 630), configured to obtain a second differential image by performing differential calculation on the N^{th} image frame and the first image frame in the N image frames;
a first determining module (540; 640), configured to determine a first detection result based on the N-1 first differential image frames, and determine a second detection result based on the second differential image; and
a second determining module (550; 650), configured to determine a living face detection result in the video based on the first detection result and the second detection result.

9. The apparatus of claim 8, wherein the first determining module (540; 640) is further configured to:
obtain spatiotemporal feature vectors of the N-1 first differential image frames by performing spatiotemporal feature extraction on the N-1 first differential image frames;
obtain a first weighted result by performing weighted calculation on the spatiotemporal feature vectors; and
obtain the first detection result by performing normalization processing on the first weighted result.

10. The apparatus of claim 8, wherein the first determining module (540; 640) is further configured to:
obtain first feature vectors by performing feature extraction on the second differential image;
obtain a second weighted result by performing weighted calculation on the first feature vectors; and
obtain the second detection result by performing normalization processing on the second weighted result.

11. The apparatus of any of claims 8-10, wherein the second determining module (550; 650) further comprises:
a judging unit (551; 651), configured to determine whether the second detection result is less than a preset threshold;
a first determining unit (552; 652), configured to, in response to the second detection result being less than the preset threshold, determine the living face detection result in the video based on the second detection result; and
a second determining unit (553; 653), configured to, in response to the second detection result being greater than or equal to the preset threshold, obtain a fused result by performing fusion processing on the first detection result and the second detection result, and determine the fused result as the living face detection result in the video.

12. The apparatus of claim 11, wherein the second determining unit (553; 653) is further configured to:
obtain an average result by averaging the first detection result and the second detection result, and determine the average result as the living face detection result in the video; or,
obtain a weighted average result by performing weighted average processing on the first detection result and the second detection result, and determine the weighted average result as the living face detection result in the video.

13. The apparatus of claim 11, wherein, the first detection result and the second detection result are dichotomous classification results, in which a first classification result represents a probability of detecting a living face in the video, and a second classification result represents a probability of detecting a non-living face in the video,
the judging unit (551; 651) is further configured to determine whether the first classification result in the second detection result is less than the preset threshold;
the first determining unit (552; 652) is further configured to, in response to the first classification result in the second detection result being less than the preset threshold, determine the living face detection result in the video based on the second detection result; and
the second determining unit (553; 653) is further configured to, in response to the first classification result in the second detection result being greater than or equal to the preset threshold, obtain the fused result by performing fusion processing on the first detection result and the second detection result, and determine the fused result as the living face detection result in the video.

14. The apparatus of any of claims 8-13, further comprising:
a normalizing module (660), configured to obtain N normalized face image frames by performing pixel normalization processing on the N face image frames; wherein
the first differential module (520; 620) is further configured to obtain the N-1 first differential image frames by performing differential calculation on two adjacent frames of the N normalized face image frames.

15. A non-transitory computer readable storage medium having computer instructions stored thereon, wherein the computer instructions are configured to cause a computer to implement the method according to any one of claims 1 to 7.
